# EUROPEAN PATENT APPLICATION

(11) **EP 4 408 061 A1**
(43) Date of publication of application: **31.07.2024**
(21) Application number: 21957768.1
(22) Date of filing: 22.09.2021
(51) Int. Cl.: H04W 24/08, H04W 24/04

(54) **MEASUREMENT GAP SCHEDULING METHOD AND APPARATUS THEREFOR**

(71) Applicant: Beijing Xiaomi Mobile Software Co., Ltd., Beijing 100085 (CN)
(72) Inventor: TAO, Xuhua, Beijing 100085 (CN)
(74) Representative: Kudlek, Franz Thomas
(86) International application number: PCT/CN2021/119714
(87) International publication number: WO 2023/044628

(57) **Abstract**

Disclosed in the embodiments of the present application are a measurement gap scheduling method and an apparatus therefor, which can be applied to the technical field of communications. The method, which is executed by a terminal device, comprises: receiving indication information, wherein the indication information is used for indicating the state of a measurement gap. By means of implementing the embodiments of the present application, dynamic switching of a measurement gap can be realized, thereby saving on resources and preventing resources from being wasted.

## Description

### TECHNICAL FIELD

The present disclosure relates to a field of communication technologies, and in particularly, to a method and an apparatus for scheduling a measurement gap.

### BACKGROUND

In a new radio (NR) system, when a terminal device performs a mobility measurement, if a reference signal of a neighbor cell to be measured is not in a currently actived bandwidth part (BWP) frequency domain, the terminal device requires a measurement gap to complete the mobility measurement.

In general, the BWP may be switched via downlink control information (DCI) and a timer and other manners. The BWP is switched more dynamically or rapidly than the measurement gap when switched via a DCI indication, in which case a network may always assume that the measurement gap is used for the mobility measurement, which may cause a loss of a throughput to the network and the terminal.

Therefore, it is an urgent problem to be solved how to provide a method for scheduling a measurement gap.

### SUMMARY

A method and an apparatus for scheduling a measurement gap are provided according to embodiments of the disclosure, which may dynamically switch a state of the measurement gap, thereby avoiding a waste of resources.

In a first aspect, a method for scheduling a measurement gap is provided according to embodiments of the disclosure, and performed by a terminal device. The method includes: receiving first indication information for indicating a state of the measurement gap.

In the technical solution, the terminal device may dynamically switch the state of the measurement gap based on an indication of indication information after receiving the indication information for indicating the state of the measurement gap, thereby avoiding a waste of resources.

Optionally, the first indication information indicates a state of a measurement gap of each configured bandwidth part (BWP) on each serving cell;
or,
the first indication information indicates a number of serving cells and a state of a measurement gap on each of the serving cells.

Optionally, receiving the first indication information includes:
receiving the first indication information based on a measurement gap configuration signaling.

Optionally, the method further includes:
activating or deactivating the measurement gap based on the state of the measurement gap in the first indication information.

Optionally, the method further includes: receiving second indication information for indicating a switched BWP; and
activating or deactivating a measurement gap corresponding to the switched BWP based on the state of the measurement gap corresponding to the switched BWP in the first indication information.

In a second aspect, another method for scheduling a measurement gap is provided according to embodiments of the disclosure, and performed by a network device. The method includes: transmitting first indication information for indicating a state of the measurement gap.

In the solution, the network device may indicate the state of the measurement gap to the terminal device, so that the terminal device may dynamically switch the state of the measurement gap based on indication information, which avoids a waste of resources.

Optionally, the first indication information indicates a state of a measurement gap of each configured bandwidth part (BWP) on each serving cell; or,
the first indication information indicates a number of serving cells and a state of a measurement gap on each of the serving cells.

Optionally, transmitting the first indication information includes:
transmitting the first indication information based on a measurement gap configuration signaling.

Optionally, the state of measurement gap includes an activated state or a deactivated state.

Optionally, second indication information for indicating a switched BWP is transmitted.

In a third aspect, a communication apparatus is provided according to embodiments of the present disclosure, and includes:
a transceiving module, configured to receive first indication information for indicating a state of a measurement gap.

Optionally, the first indication information indicates a state of a measurement gap of each configured bandwidth part (BWP) on each serving cell; or,
the first indication information indicates a number of serving cells and a state of a measurement gap on each of the serving cells.

Optionally, the transceiving module is specifically configured to:
receive the first indication information based on a measurement gap configuration signaling.

Optionally, the apparatus further includes:
a processing module, configured to activate or deactivate the measurement gap based on a state of a measurement gap in indication information.

In a fourth aspect, another communication apparatus is provided according to embodiments of the present disclosure, configured at a network device side. The apparatus includes:
a transceiving module, configured to send first indication information for indicating a state of a measurement gap.

Optionally, the first indication information indicates a state of a measurement gap of each configured bandwidth part (BWP) on each serving cell;
or,
the first indication information indicates a number of serving cells and a state of a measurement gap on each of the serving cells.

Optionally, the transceiving module is specifically configured to:
send the first indication information based on a configuration signaling of the measurement gap.

Optionally, the state of measurement gap includes an activated state or a deactivated state.

In a fifth aspect, a communication device is provided according to embodiments of the disclosure. The communication device includes a processor. When the processor calls a computer program in a memory, the method according to the first aspect is performed.

In a sixth aspect, a communication device is provided according to embodiments of the disclosure. The communication device includes a processor. When the processor calls a computer program in a memory, the method according to the second aspect is performed.

In a seventh aspect, a communication device is provided according to embodiments of the disclosure. The communication device includes a processor and a memory. The memory is stored with a computer program. The processor executes the computer program stored in the memory, causing the communication device to perform the method according to the first aspect.

In an eighth aspect, a communication device is provided according to embodiments of the disclosure. The communication device includes a processor and a memory. The memory is stored with a computer program. The processor executes the computer program stored in the memory, causing the communication device to perform the method according to the second aspect.

In a ninth aspect, a communication device is provided according to embodiments of the disclosure. The communication device includes a processor and an interface circuit. The interface circuit is configured to receive code instructions and transmit the code instructions to the processor. The processor is configured to run the code instructions, causing the device to perform the method according to the above first aspect.

In a tenth aspect, a communication device is provided according to embodiments of the disclosure. The device includes a processor and an interface circuit. The interface circuit is configured to receive code instructions and transmit the code instructions to the processor. The processor is configured to run the code instructions, causing the device to perform the method according to the above second aspect.

In an eleventh aspect, a system for scheduling a measurement gap is provided according to embodiments of the disclosure. The system includes the communication apparatus as described in the third aspect and the communication apparatus as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the ninth aspect and the communication device as described in the tenth aspect.

In a twelfth aspect, a computer-readable storage medium is provided according to embodiments of the present disclosure. The computer-readable storage medium is configured to store instructions used by the terminal device. When the instructions are executed, the terminal device performs the method according to the first aspect.

In a thirteenth aspect, a readable storage medium is provided according to embodiments of the present disclosure. The readable storage medium is configured to store instructions used by the network device. When the instructions are executed, the network device performs the method according to the second aspect.

In a fourteenth aspect, a computer program product including a computer program is provided according to embodiments of the present disclosure. When the computer program is running on a computer, the computer performs the method according to the first aspect.

In a fifteenth aspect, a computer program product including a computer program is further provided according to embodiments of the present disclosure. When the computer program is running on a computer, the computer performs the method according to the second aspect.

In a sixteenth aspect, a system on chip (SoC) is provided in the disclosure. The SoC includes at least one processor and an interface, and is configured to support a terminal device to implement functions involved in the first aspect, and for example, to determine or process at least one of data and information involved in the above methods. In a possible design, the SoC further includes a memory. The memory is configured to save a necessary computer program and data of a terminal device. The SoC may include a chip, or may include a chip and other discrete devices.

In a seventeenth aspect, a system on chip (SoC) is provided in the disclosure. The SoC includes at least one processor and an interface, and is configured to support a network device to implement functions involved in the second aspect, and for example, to determine or process at least one of data and information involved in the above methods. In a possible design, the SoC further includes a memory. The memory is configured to save a necessary computer program and data of a network device. The SoC may include a chip, or may include a chip and other discrete devices.

In an eighteenth aspect, a computer program is provided in the present disclosure. When the computer program is running on a computer, the computer is caused to perform the method according to the first aspect.

In a nineteenth aspect, a computer program is provided in the present disclosure. When the computer program is running on a computer, the computer is caused to perform the method according to the second aspect.

### BRIEF DESCRIPTION OF THE DRAWINGS

In order to explain technical solutions in embodiments of the disclosure or the background more clearly, the accompanying drawings required for embodiments of the disclosure or the background will be briefly introduced below.
FIG. 1 is a diagram illustrating an architecture of a communication system according to embodiments of the present disclosure.
FIG. 2 is a flowchart illustrating a method for scheduling a measurement gap according to embodiments of the present disclosure.
FIG. 3 is a flowchart illustrating another method for scheduling a measurement gap according to embodiments of the present disclosure.
FIG. 4 is a flowchart illustrating another method for scheduling a measurement gap according to embodiments of the present disclosure.
FIG. 5 is a flowchart illustrating another method for scheduling a measurement gap according to embodiments of the present disclosure.
FIG. 6 is a flowchart illustrating another method for scheduling a measurement gap according to embodiments of the present disclosure.
FIG. 7 is a flowchart illustrating another method for scheduling a measurement gap according to embodiments of the present disclosure.
FIG. 8 is a flowchart illustrating yet another method for scheduling a measurement gap according to embodiments of the present disclosure.
FIG. 9 is a flowchart illustrating another method for scheduling a measurement gap according to embodiments of the present disclosure.
FIG. 10 is a diagram illustrating a structure of a communication apparatus according to embodiments of the present disclosure.
FIG. 11 is a diagram illustrating a structure of another communication device according to embodiments of the present disclosure.
FIG. 12 is a diagram illustrating a structure of a chip according to embodiments of the present disclosure.

### DETAILED DESCRIPTION

For convenience of understanding, terms involved in the disclosure are introduced first.

### 1. Downlink Control Information (DCI)

The DCI is carried by a physical downlink control channel (PDCCH). The DCI may include uplink and downlink resource allocation, hybrid automatic repeat request (HARQ) information, power control, etc. The PDCCH is a physical channel for carrying downlink scheduling information.

### 2. Bandwidth Part (BWP)

The bandwidth part (BWP) is a subset of a total bandwidth that adaptively and flexibly adjusts a size of reception and transmission bandwidths of a terminal device via a bandwidth in a NR, so that the reception and transmission bandwidths of the terminal device are not necessary to be as large as a bandwidth of a cell.

### 3. Measurement gap

The measurement gap is an inter-frequency measurement mode, a specific operation of which is that, during an inter-frequency measurement, a period of time (that is, a measurement gap time) is reserved, and the terminal device may adjust the receiver towards a frequency point of a target cell to perform the inter-frequency measurement, rather than transmitting and receiving any data, during this period of time, and the terminal device is switched to a current cell after the gap time ends.

In order to understand a method for scheduling a measurement gap in embodiments of the disclosure better, a communication system to which embodiments of the present disclosure are applied is described below.

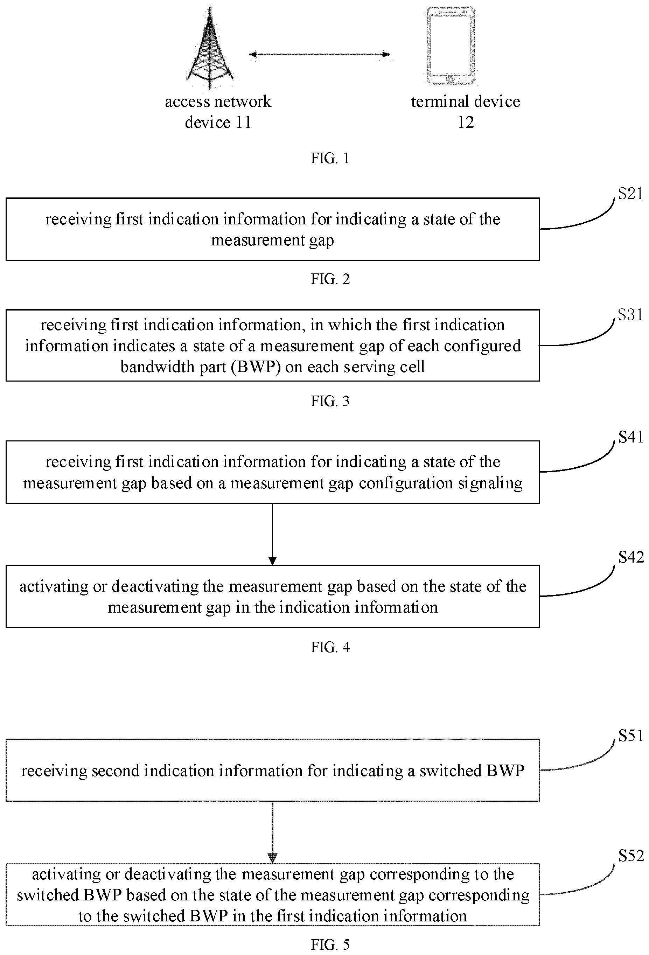

Referring to FIG. 1, FIG. 1 is a diagram illustrating an architecture of a communication system according to embodiments of the present disclosure. The communication system may include, but is not limited to, one network device and one terminal device. A number and a form of the devices shown in FIG. 1 are only for example and do not constitute a limitation to embodiments of the present disclosure, and the communication system may include two or more network devices and two or more terminal devices in practical applications. The communication system as illustrated in FIG. 1 takes one network device 11 and one terminal device 12 being included for example.

It is noted that the technical solution in embodiments of the present disclosure may be applied to various communication systems. For example, a long term evolution (LTE) system, a 5th generation (5G) mobile communication system, a 5G new radio (NR) system or other future new mobile communication systems.

The network device 11 in embodiments of the disclosure is an entity for transmitting or receiving a signal at a network side. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the present disclosure. The network device according to embodiments of the present disclosure may consist of a central unit (CU) and a distributed unit (DU). The CU may also be referred to as a control unit, and a network device such as a protocol layer of a base station, may be split by using a CU-DU structure, functions of a part of the protocol layer are placed in the CU for centralized control, and functions of a remaining part or all of the protocol layer are distributed in the DU centrally controlled by the CU.

The terminal device 12 in embodiments of the disclosure is an entity for receiving or transmitting a signal at a user side, for example, a mobile phone. The terminal device may be referred to as a terminal, a user equipment (UE), a mobile station (MS), a mobile terminal (MT), etc. The terminal device may be an automobile, a smart automobile, a mobile phone, a wearable device, a tablet computer (Pad) each with a communication function, a computer, a virtual reality (VR) terminal device, an augmented reality (AR) terminal device each with a wireless transceiving function, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, a wireless terminal device in a smart home, etc. A specific technology and a specific device form adopted by the terminal device are not limited in embodiments of the present disclosure.

It may be understood that, the communication system described in embodiments of the present disclosure are intended to explain technical solutions of embodiments of the present disclosure more clearly, and does not constitute a limitation to the technical solutions provided by embodiments of the present disclosure. Those skilled in the art know that, with evolution of a system architecture and emergence of a new business scenario, the technical solutions provided in embodiments of the present disclosure are equally applied to similar technical problems.

A method and an apparatus for scheduling a measurement gap provided in the disclosure are described in combination with the accompanying drawings.

Referring to FIG. 2, FIG. 2 is a flowchart illustrating a method for scheduling a measurement gap according to embodiments of the present disclosure. The method is performed by a terminal device. As illustrated in FIG. 2, the method may include, but is not limited to, following steps.

At S21, first indication information for indicating a state of a measurement gap is received.

In the disclosure, considering when the BWP is switched by means of a DCI command, the BWP is switched faster than the measurement gap. In order to avoid a waste of resources resulted by the network may always assuming that the measurement gap is used for mobility measurement, the network device may indicate a state of each measurement gap to the terminal device via the first indication information, and the terminal device may activate or deactivate the measurement gap rapidly based on the state of the measurement gap indicated in the indication information, thereby avoiding the waste of resources.

In the disclosure, when receiving a BWP switch instruction, the terminal device may determine the state of the measurement gap on a currently activated BWP based on the first indication information, and further dynamically activate or deactivate the measurement gap.

Optionally, the first indication information may include a state of a measurement gap corresponding to each configured bandwidth part (BWP) on each serving cell, or may include a state of a measurement gap corresponding to each serving cell. The state of the measurement gap may include an activated state or a deactivated state.

By implementing embodiments of the disclosure, the terminal device may dynamically activate or deactivate the measurement gap based on the state of the measurement gap in the first indication information after receiving the indication information. In this way, it may be avoided a situation that the measurement gap always has been assumed for the mobility measurement, resulting in avoiding a waste of resources.

Referring to FIG. 3, FIG. 3 is a flowchart illustrating another method for scheduling a measurement gap according to embodiments of the present disclosure. As illustrated in FIG. 3, the method may be performed by a terminal device, and may include but is not limited to following steps.

At S31, first indication information is received. The first indication information indicates a state of a measurement gap of each configured bandwidth part (BWP) on each serving cell.

In the disclosure, each terminal device may have a plurality of serving cells, and each cell may configure a plurality of BWPs. The terminal device may perform a mobility measurement on each cell. Therefore, the first indication information may include state indication information of the measurement gap of each BWP configured by each serving cell, so that the terminal device may rapidly query the state of the measurement gap on the currently activated BWP based on the first indication information when performing BWP switch.

Optionally, the first indication information may be formed in the following way. Contents indicated in the first indication information may be shown in Table 1 when implementation.

**Table 1**

| ServCellIndex#i | *BWP-Id #j* | | | |
|---|---|---|---|---|
| | 0 | 1 | 2 | 3 |
| 0 | ON | OFF | ON | OFF |
| 1 | ON | ON | OFF | OFF |
| 2 | OFF | OFF | OFF | ON |
| 4 | ON | OFF | OFF | ON |

In the above table, ON represents that the configured measurement gap is in an activated state, OFF represents that the configured measurement gap is in a deactivated state, a column where ServCellIndex is located represents a serving cell number, and a next row of BWP-Id represents a BWP number. An intersection cell of a ServCellIndex #0 row and a BWP-Id #0 column is ON, which means that the measurement gap shall be set to an active state when the terminal device is in a serving cell with an index of 0, and is switched to a BWP with a number of 0. Similarly, an intersection cell of a ServCellIndex #0 row and a BWP-Id #1 column is OFF, which means that the measurement gap shall be set to the deactivated state when the terminal device is in a serving cell with the index of 0, and is switched to a BWP with a number of 1.

It may be understood that, each elementand each correspondance in Table 1 exist independently, and are exemplarily listed in the same table, but do not represent that all elements and correspondances in the table must exist simultaneously in Table 1. A value of each element and each correspondance do not depend on any other element value or correspondance in Table 1. Therefore, those skilled in the art may understand that the value of each element and each correspondance in Table 1 are an independent embodiment.

Optionally, the first indication information may indicate a number of serving cells and a state of a measurement gap on each of the serving cells referring to a current protocol form.

For example, the first indication information indicates that there are 4 serving cells currently corresponding to the terminal device, a state of a measurement gap corresponding to a serving cell 1 is an activated state, a state of a measurement gap corresponding to a serving cell 2 is a deactivated state, a state of a measurement gap corresponding to a serving cell 3 is the deactivated state, and a state of a measurement gap corresponding to a serving cell 4 is the activated state. When the terminal device performs a mobility measurement, if the serving cell where the terminal device is located is the serving cell 3, the current measurement gap is in the deactivated state based on the first indication information, so that the measurement gap may be deactivated.

It may be understood that, in an indication form, conversion of the state of the measurement gap does not depend on switching of the BWP, but depends on switching of the serving cell.

By implementing embodiments of the disclosure, the first indication information may indicate the state of the measurement gap corresponding to each BWP more comprehensively and more efficiently, so that the terminal device may dynamically adjust the state of the measurement gap based on switching of the BWP. Therefore, it may be avoided the network device always being in a state that the measurement gap is activated and wasting resources.

Referring to FIG. 4, FIG. 4 is a flowchart illustrating a method for scheduling a measurement gap according to embodiments of the present disclosure. The method is performed by a terminal device. As illustrated in FIG. 4, the method may include but is not limited to the following steps.

At S41, first indication information for indicating a state of a measurement gap is received based on a measurement gap configuration signaling.

In a communication system, information is generally received/transmitted in a certain way. In the disclosure, the first indication information may be recorded in a measurement gap configuration signaling MeasGapConfig, that is, the network device may indicate states of measurement gaps simultaneously when configuring the measurement gap for the terminal device.

Contents and an implementation form of the first indication information may refer to descriptions of any one embodiment of the present disclosure, which are not repeated herein.

At S42, the measurement gap is activated or deactivated based on the state of the measurement gap in the first indication information.

In the disclosure, the terminal device may query a state of a corresponding measurement gap based on a cell to be measured and a currently activated BWP after receiving the first indication information. When the state of the measurement gap is an activated state, the measurement gap is activated. When the state of the measurement gap is a deactivated state, the measurement gap is deactivated.

For example, assumed that a serving cell where the terminal device is currently located is a ServCellIndex#1 serving cell, and an activated BWP is BWP-id#1, it may be determined that a measurement gap corresponding to ServCellIndex#1 and BWP-id#1 is in the activated state by querying the first indication information, in which case, the measurement gap may be activated.

Optionally, when the terminal device is switched to BWP-id#2 based on a BWP switch indication information, the terminal device may query state indication information of the measurement gap corresponding to BWP-id#2 of the ServCellIndex#1 serving cell in the first indication information. When the state indication information is activated indication information, the measurement gap is maintained in the activated state and the mobility measurement is performed. When the state indication information is deactivated indication information, the measurement gap is deactivated, and the mobility measurement is not performed.

By implementing embodiments of the disclosure, the terminal device may update the state of the measurement gap rapidly as required according to the state of the measurement gap indicated in the measurement gap configuration signaling. Therefore, it may be avoided a situation that the measurement gap is always in the activated state, and resources are saved.

Referring to FIG. 5, FIG. 5 is a flowchart illustrating a method for scheduling a measurement gap according to embodiments of the present disclosure. The method is performed by a terminal device. Referring to FIG. 5, the method may include but is not limited to the following steps.

At S51, second indication information for indicating a switched BWP is received.

Optionally, the second indication information may be DCI information.

In the disclosure, in a moving process of the terminal device, the network device may transmit BWP switch indication information to the terminal device in real time based on a location where the terminal device is currently located, to indicate the terminal device to perform BWP switch.

At S52, the measurement gap corresponding to the switched BWP is activated or deactivated based on the state of the measurement gap corresponding to the switched BWP in the first indication information.

Each BWP in each serving cell may correspond to one state of the measurement gap. After receiving an indication of the BWP switch, the terminal device may determine a state of the gap corresponding to the switched BWP based on a BWP state indicated in the first indication information, and further switch the state of the measurement gap, so that switching of the measurement gap may be synchronized with switching of the BWP. The first indication information may be pre-configured in the terminal device, or, may be received before the terminal device receives the second indication information, or may be received while the terminal device receives the second indication information. In the disclosure, the terminal device may query the state of the measurement gap indicated in the first indication information based on the serving cell and the second indication information for indicating the BWP switch, to determine a state of a measurement gap corresponding to the switched BWP, after receiving the first indication information and the second indication information. When the state of the measurement gap is activated, the measurement gap is activated, and when the state of the measurement gap is deactivated, the measurement gap is deactivated.

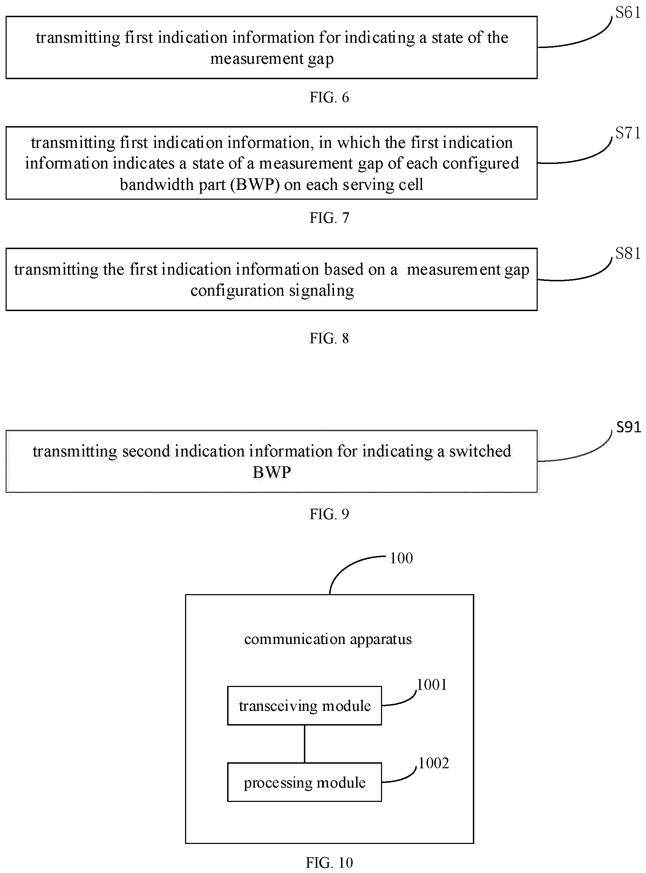

For example, assumed that a serving cell where the terminal device is currently located is a ServCellIndex#1 serving cell, and an activated BWP is BWP-id#1, and the measurement gap is in an activated state, a switched cell indicated by the second indication information received by the terminal device is BWP-id#2, the terminal device may determine the state of the measurement gap corresponding to BWP-id#2 of the ServCellIndex#1 serving cell based on an indication in the first indication information. When the state indication information is activated indication information, the measurement gap is maintained in the activated state and the mobility measurement is performed, and when the state indication information is deactivated indication information, the measurement gap is deactivated, and the mobility measurement is not performed. By implementing embodiments of the disclosure, the terminal device may dynamically activate or deactivate the measurement gap based on the state of the measurement gap corresponding to the switched BWP in the first indication information after receiving the second indication information for indicating the BWP switch. In this way, it may be avoided that a situation that the measurement gap has always been assumed for mobility measurement, resulting in avoiding a waste of resources. Referring to FIG. 6, FIG. 6 is a flowchart illustrating yet another method for scheduling a measurement gap according to embodiments of the present disclosure. The method is performed by a network device. As illustrated in FIG. 6, the method may include but is not limited to the following steps.

At S61, first indication information for indicating a state of a measurement gap is transmitted.

In the disclosure, considering when the BWP is switched by means of a DCI command, the BWP is switched faster than the measurement gap. In order to avoid a waste of resources resulted by the network may always assuming that the measurement gap is used for mobility measurement, the network device may indicate a state of each measurement gap to the terminal device via the first indication information, so that the terminal device may activate or deactivate the measurement gap rapidly based on the state of the measurement gap indicated in the indication information, thereby avoiding the waste of resources.

Optionally, the first indication information may include a state of a measurement gap corresponding to each configured bandwidth part (BWP) on each serving cell, or may include a state of a measurement gap corresponding to each serving cell. The state of the measurement gap may include an activated state or a deactivated state.

By implementing embodiments of the disclosure, the network device indicates the state of the measurement gap to the terminal device, so that the terminal device may dynamically activate or deactivate the measurement gap. In this way, it may be avoided a situation that the measurement gap has always been assumed for mobility measurement, resulting in avoiding a waste of resources.

Referring to FIG. 7, FIG. 7 is a flowchart illustrating yet another method for scheduling a measurement gap according to embodiments of the present disclosure. The method is performed by a network device. As illustrated in FIG. 7, the method may include but is not limited to the following steps.

At S71, first indication information is transmitted. The first indication information indicates a state of a measurement gap of each configured bandwidth part (BWP) on each serving cell.

In the disclosure, each terminal device may have a plurality of serving cells, and each cell may configure a plurality of BWPs. The terminal device may perform a mobility measurement on each cell. Therefore, the first indication information may include state indication information of the measurement gap of each BWP configured by each serving cell, so that the terminal device may rapidly query the state of the measurement gap on the currently activated BWP based on the first indication information when performing BWP switch.

Optionally, contents indicated in the first indication information may be shown in Table 1, which will not be repeated herein.

It may be understood that, the network device may transmit the first indication information to the terminal device, and the terminal device may rapidly query a state of a corresponding measurement gap when performing the BWP switch after receiving the first indication information, and further activate or deactivate the measurement gap.

Optionally, the first indication information may indicate a number of serving cells and a state of a measurement gap on each of the serving cells referring to a current protocol form.

For example, the first indication information indicates that there are 4 serving cells currently corresponding to the terminal device, a state of a measurement gap corresponding to a serving cell 1 is an activated state, a state of a measurement gap corresponding to a serving cell 2 is a deactivated state, a state of a measurement gap corresponding to a serving cell 3 is the deactivated state, and a state of a measurement gap corresponding to a serving cell 4 is the activated state. When the terminal device performs a mobility measurement, if the serving cell the terminal device is located is the serving cell 3, the current measurement gap is in the deactivated state based on the first indication information, so that the measurement gap may be deactivated.

It may be understood that, in an indication form, conversion of the state of the measurement gap does not depend on switching of the BWP, but depends on switching of the serving cell.

By implementing embodiments of the disclosure, the indication information may indicate the state of the measurement gap corresponding to each BWP more comprehensively and more efficiently, so that the terminal device may dynamically adjust the state of the measurement gap based on switch of the BWP. Therefore, it may be avoided the network device always being in a state that the measurement gap is activated and wasting resources.

Referring to FIG. 8, FIG. 8 is a flowchart illustrating still yet another method for scheduling a measurement gap according to embodiments of the present disclosure. The method is performed by a network device. As illustrated in FIG. 8, the method may include but is not limited to the following steps.

At S81, the first indication information is transmitted based on a measurement gap configuration signaling.

In a communication system, information is generally received/transmitted in a certain way. In the disclosure, the indication information may be recorded in a measurement gap configuration signaling MeasGapConfig, that is, the network device may indicate states of measurement gaps simultaneously when configuring the measurement gap for the terminal device.

In the disclosure, the terminal device may query a state of a corresponding measurement gap based on the serving cell and the currently activated BWP after receiving the first indication information. When the state of the measurement gap is an activated state, the measurement gap is activated. When the state of the measurement gap is a deactivated state, the measurement gap is deactivated.

For example, assumed that a serving cell where the terminal device is currently located is a ServCellIndex#1 serving cell, and an activated BWP is BWP-id#1, the measurement gap is in the activated state. When the terminal device is switched to BWP-id#2 based on the BWP switch indication information, the terminal device may query state indication information of the measurement gap corresponding to BWP-id#2 of the ServCellIndex#1 serving cell in the first indication information. When the state indication information is activated indication information, the measurement gap is maintained in the activated state and the mobility measurement is performed. When the state indication information is deactivated indication information, the measurement gap is deactivated, and the mobility measurement is not performed.

By implementing embodiments of the disclosure, the network device may indicate the state of the measurement gap to the terminal device via the measurement gap configuration signaling, and further the terminal device may update the state of the measurement gap rapidly as required. Therefore, it may be avoided a situation that the measurement gap is always in the activated state, and resources are saved.

Referring to FIG. 9, FIG. 9 is a flowchart illustrating still yet another method for scheduling a measurement gap according to embodiments of the present disclosure. The method is performed by a network device. As illustrated in FIG. 9, the method may include but is not limited to the following steps.

At S91, second indication information for indicating a switched BWP is transmitted.

Optionally, the second indication information may be DCI information.

In the disclosure, in a moving process of the terminal device, the network device may transmit BWP switch indication information to the terminal device in real time based on a location where the terminal device is currently located, to indicate the terminal device to perform BWP switch.

In the disclosure, the terminal device may query the state of the measurement gap indicated in the first indication information based on the serving cell and second indication information for indicating the BWP switch, to determine a state of a measurement gap corresponding to the switched BWP, after receiving the first indication information and the second indication information. The first indication information may be preconfigured in the terminal device, or, may be transmitted before the network device transmits the second indication information, or may be transmitted while the network device transmits the second indication information.

For example, assumed that a serving cell where the terminal device is currently located is a ServCellIndex#1 serving cell, and an activated BWP is BWP-id#1, and the measurement gap is in an activated state, a switched cell indicated by the second indication information received by the terminal device is BWP-id#2, the terminal device may determine the state of the measurement gap corresponding to BWP-id#2 of the ServCellIndex#1 serving cell based on an indication in the first indication information.

By implementing embodiments of the disclosure, the network device indicates the switched BWP to the terminal device by transmitting the second indication information, and the terminal device may dynamically activate or deactivate the measurement gap based on the state of the measurement gap corresponding to the switched BWP in the first indication information. In this way, it may be avoided that a situation that the measurement gap has always been assumed for mobility measurement, resulting in avoiding a waste of resources. In embodiments provided in the disclosure, methods in embodiments of the present disclosure are introduced mainly from perspectives of a network device and a terminal device. To achieve various functions in the methods provided in embodiments of the disclosure, the network device and a first terminal device may include a hardware structure and a hardware module, to achieve the above functions in a form of a hardware structure, a hardware module or a combination of the hardware structure and the hardware module. A certain function in the above functions may be performed by the hardware structure, the hardware module or a combination of the hardware structure and the hardware module.

Referring to FIG. 10, FIG. 10 is a diagram illustrating a structure of a communication apparatus 100 according to embodiments of the present disclosure. The communication apparatus 100 as illustrated in FIG. 10 may include a transceiving module 1001 and a processing module 1002. The transceiving module 1001 may include a transmitting module and/or a receiving module. The transmitting module is configured to implement a transmitting function, the receiving module is configured to implement a receiving function, and the transceiving module 1001 may implement a transmitting function and/or a receiving function.

It is understood that the communication apparatus 100 may be a terminal device, an apparatus in the terminal device, or an apparatus capable of being matched with the terminal device.

The communication apparatus 100 is configured at a terminal device side. The apparatus includes a transceiving module 1001.

The transceiving module 1001 is configured to receive first indication information for indicating a state of a measurement gap.

Optionally, the first indication information indicates a state of a measurement gap of each configured bandwidth part (BWP) on each serving cell;
or,
the first indication information indicates a number of serving cells and a state of a measurement gap on each of the serving cells.

Optionally, the transceiving module 1001 is specifically configured to:
receive the first indication information based on a measurement gap configuration signaling.

Optionally, the apparatus further includes a processing module 1002.

The processing module 1002 is configured to activate or deactivate the measurement gap based on the state of the measurement gap in the first indication information.

The communication apparatus provided in the disclosure may indicate the state of the measurement gap based on the first indication information, and further dynamically activate or deactivate the measurement gap. In this way, it may be avoided a situation that the measurement gap has always been assumed to be used for performing mobility measurement, resulting in avoiding a waste of resources.

It may be understood that the communication apparatus 100 may be a network device, an apparatus in the network device, or an apparatus capable of being matched with the network device.

The communication apparatus 100 is configured at a network device side. The apparatus includes a transceiving module 1001.

The transceiving module 1001 is configured to transmit first indication information for indicating a state of a measurement gap.

Optionally, the first indication information indicates a state of a measurement gap of each configured bandwidth part (BWP) on each serving cell;
or,
the first indication information indicates a number of serving cells and a state of a measurement gap on each of the serving cells.

Optionally, the transceiving module 1001 is specifically configured to:
send the first indication information based on a measurement gap configuration signaling.

Optionally, the state of the measurement gap includes an activated state or a deactivated state.

The communication apparatus provided in the disclosure may indicate the state of the measurement gap based on the first indication information, and further dynamically activate or deactivate the measurement gap. In this way, it may be avoided that the measurement gap has always been assumed to be used for performing a mobility measurement, beneficial to avoiding a waste of resources.

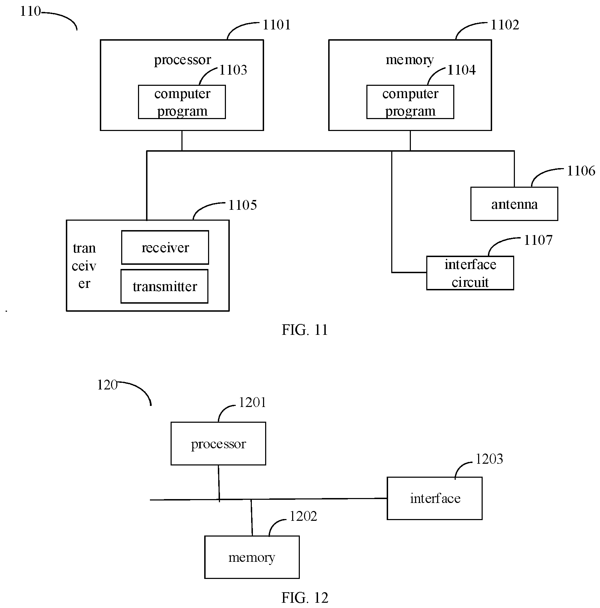

Referring to FIG. 11, FIG. 11 is a diagram illustrating a structure of another communication device 110 according to embodiments of the present disclosure. The communication device 100 may be a network device, a terminal device (a first terminal device in the above method embodiments), or a chip, a system on chip or a processor that supports the network device to implement the method, or a chip, a system on chip or a processor that supports the terminal device to implement the method. The device may be configured to implement the method described in the method embodiments, and may refer to descriptions in the method embodiments.

The communication device 110 may include one or more processors 1101. The processor 1101 may include a general purpose processor or a dedicated processor. For example, the processor 141 may be a baseband processor or a central processor. The baseband processor may be configured to process a communication protocol and communication data, and the central processor may be configured to control the communication device (e.g., a base station, a baseband chip, a terminal device, a terminal device chip, a DU or CU, etc.), to execute a computer program, and process data of the computer program.

Optionally, the communication device 110 may further include one or more memories 1102 with a computer program 1104 stored thereon. The processor 1101 executes the computer program 1104 so that the communication device 110 performs the method as described in the above method embodiments. Optionally, the memory 1102 may further store data. The communication device 110 and the memory 1102 may be independently configured or integrated together.

Optionally, the communication device 110 may further include a transceiver 1105 and an antenna 1106. The transceiver 1105 may be referred to as a transceiving unit, a transceiver or a transceiving circuit, which may be configured to achieve a transceving function. The transceiver 1105 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication device 110 may further include one or more interface circuits 1107. The interface circuit 1107 is configured to receive code instructions and transmit the code instructions to the processor 1101. The processor 1101 runs the code instructions so that the communication device 110 performs the method according to the above method embodiment.

The communication device 110 is a terminal device (a first terminal device in the above method embodiments): the processor is configured to execute step S41 in FIG. 4.

The communication device 110 is a network device: the transceiver 1105 is configured to execute step S61 shown in FIG. 6; execute step S71 in FIG. 7; execute step S81 in FIG. 8; and execute step S91 in FIG. 9.

In an implementation, the processor 1101 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1101 may be stored with a computer program 1103. The computer program 1103 runs on the processor 141 so that the communication device 110 performs the method as described in the above method embodiments. The computer program 1103 may be solidified in the processor 1101, in which case the processor 1101 may be implemented by hardware.

In an implementation, the communication device 110 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a terminal device (for example, a first terminal device in the above method embodiments), but the scope of the communication device described in the present disclosure is not limited thereto, and a structure of the communication device may not be subject to FIG. 11. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

In the case that the communication device may be a chip or a system on chip, please refer to a diagram of a structure of a chip as illustrated in FIG. 12. The chip illustrated in FIG. 12 may include a processor 1201 and an interface 1202. There may be one or more processors 1201, and there may be a plurality of interfaces 1202.

In the case that the chip is configured to implement a function of a terminal device in embodiments of the disclosure,
the interface 1202 is configured to execute step S21 shown in FIG. 2; execute step S31 in FIG. 3; execute step S41 in FIG. 4; and execute step S51 in FIG. 5.

In the case that the chip is configured to implement a function of a network device in embodiments of the disclosure,
the interface 1102 is configured to execute step S61 shown in FIG. 6; execute step S71 in FIG. 7; execute step S81 in FIG. 8; or execute step S91 in FIG. 9.

Optionally, the chip further includes a memory 1103. The memory 1103 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A system for determining a sidelink duration is further provided in embodiments of the disclosure. The system includes a communication device serving as a terminal device (for example, a first terminal device in the above method embodiments) in embodiments of FIG. 8 and a communication device serving as a network device, or the system includes a communication device serving as a terminal device (for example, a first terminal device in the above method embodiments) in embodiments of FIG. 10 and a communication device serving as a network device.

A readable storage medium with instructions stored thereon is further provided in the disclosure. When the instructions are executed by a computer, steps in the any one method embodiment are implemented.

A computer program product is further provided in the disclosure. The computer program product implements functions of the above any one method embodiment when executed by a computer.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for scheduling a measurement gap, performed by a terminal device, comprising:
receiving first indication information for indicating a state of the measurement gap.

2. The method according to claim 1, wherein
the first indication information indicates a state of a measurement gap of each configured bandwidth part (BWP) on each serving cell;
or,
the first indication information indicates a number of serving cells and a state of a measurement gap on each of the serving cells.

3. The method according to claim 1, wherein receiving the first indication information comprises:
receiving the first indication information based on a measurement gap configuration signaling.

4. The method according to any one of claims 1 to 3, further comprising:
activating or deactivating the measurement gap based on the state of the measurement gap in the first indication information.

5. The method according to any one of claims 1 to 3, further comprising:
receiving second indication information for indicating a switched BWP; and
activating or deactivating a measurement gap corresponding to the switched BWP based on a state of the measurement gap corresponding to the switched BWP in the first indication information.

6. A method for scheduling a measurement gap, performed by a network device, comprising:
transmitting first indication information for indicating a state of the measurement gap.

7. The method according to claim 6, wherein the first indication information indicates a state of a measurement gap of each configured bandwidth part (BWP) on each serving cell;
or,
the first indication information indicates a number of serving cells and a state of a measurement gap on each of the serving cells.

8. The method according to claim 6, wherein transmitting the first indication information comprises:
transmitting the first indication information based on a measurement gap configuration signaling.

9. The method according to any one of claims 6 to 8, wherein the state of the measurement gap comprises an activated state or a deactivated state.

10. The method according to any one of claims 6 to 8, further comprising:
transmitting second indication information for indicating a switched BWP.

11. A communication apparatus, configured at a terminal device side, comprising:
a transceiving module, configured to receive first indication information for indicating a state of a measurement gap.

12. The apparatus according to claim 11, wherein
the first indication information indicates a state of a measurement gap of each configured bandwidth part (BWP) on each serving cell;
or,
the first indication information indicates a number of serving cells and a state of a measurement gap on each of the serving cells.

13. The apparatus according to claim 11, wherein the transceiving module is specifically configured to:
receive the first indication information based on a measurement gap configuration signaling.

14. The apparatus according to any one of claims 11 to 13, further comprising:
a processing module, configured to activate or deactivate the measurement gap based on the state of the measurement gap in the first indication information.

15. A communication apparatus, configured at a network device side, comprising:
a transceiving module, configured to transmit first indication information for indicating a state of a measurement gap.

16. The apparatus according to claim 15, wherein
the first indication information indicates a state of a measurement gap of each configured bandwidth part (BWP) on each serving cell;
or,
the first indication information indicates a number of serving cells and a state of a measurement gap on each of the serving cells.

17. The apparatus according to claim 15, wherein the transceiving module is specifically configured to:
send the first indication information based on a measurement gap configuration signaling.

18. The apparatus according to any one of claims 15 to 17, wherein the state of the measurement gap comprises an activated state or a deactivated state.

19. A communication device, comprising a processor and a memory, wherein the memory is stored with a computer program, and the processor executes the computer program stored in the memory, causing the device to perform the method according to any one of claims 1 to 5.

20. A communication device, comprising a processor and a memory, wherein the memory is stored with a computer program, and the processor executes the computer program stored in the memory, causing the device to perform the method according to any one of claims 6 to 10.

21. A computer-readable storage medium for storing instructions, wherein when the instructions are executed, the method according to any one of claims 1 to 5 is implemented.

22. A computer-readable storage medium for storing instructions, wherein when the instructions are executed, the method according to any one of claims 6 to 10 is implemented.
